# EUROPEAN PATENT APPLICATION

(11) **EP 4 336 799 A1**
(43) Date of publication of application: **13.03.2024**
(21) Application number: 23196383.6
(22) Date of filing: 08.09.2023
(51) Int. Cl.: H04L 65/612

(54) **METHODS, SYSTEMS, AND APPARATUSES FOR IMPROVED CONTENT DELIVERY**

(30) Priority: 09.09.2022 US 202263405117 P
(71) Applicant: Comcast Cable Communications LLC, Philadelphia, Pennsylvania 19103 (US)
(72) Inventor: GILADI, Alexander, Denver, 80202 (US)
(74) Representative: V.O.

(57) **Abstract**

Methods, systems, and apparatuses for improved content delivery are described herein. A client device may request a segment of content that is not yet available for delivery. An upstream computing device may receive the request from the client device. Instead of sending an error message or otherwise indicating to the client device that the request cannot be fulfilled, which may introduce latency or other delivery-related issues, the upstream computing device may send at least a portion of a fragment of the segment to the client device. The portion of the fragment may include at least one frame of the segment and/or metadata associated with the content, the fragment, and/or the segment.

## Description

### CROSS-REFERENCE TO RELATED PATENT APPLICATION

This application claims priority to U.S. Provisional App. No. 63/405,117, filed on September 9, 2022, and incorporated by reference in its entirety herein.

### BACKGROUND

Content may be delivered to client devices according to low-latency adaptive streaming protocols. When a client device sends a request for a segment of content (or a portion thereof) before the segment (or portion) is available for delivery, the client device may receive an error message and/or an indication that the request cannot be fulfilled. The client device may then retry the request at a later time, send the request to an alternative source, and/or send a request for an alternative version of the segment. These remedial actions taken by the client device introduce latency and/or other delivery-related issues. These and other considerations are discussed herein.

### SUMMARY

It is to be understood that both the following general description and the following detailed description are exemplary and explanatory only and are not restrictive. Methods, systems, and apparatuses for improved content delivery are described herein. For example, a client device may request a segment of content that is not yet available for delivery to the client device (e.g., not yet encoded and/or packaged for delivery). An upstream computing device, such as a content server, may receive the request from the client device.

Instead of sending an error message or otherwise indicating to the client device that the request cannot be fulfilled, which may introduce latency or other delivery-related issues, the upstream computing device may send at least a portion of a fragment of the segment to the client device. The portion of the fragment may include metadata associated with the content, the fragment, and/or the segment. Though the segment of the content may not be available for delivery to the client device, the metadata may be readily available for delivery. The metadata may be determined by the upstream computing device. For example, the metadata may be within (or indicated by) a manifest file for the content, which the upstream computing device may have access to when the request for the segment is received. The metadata may also be determined by the upstream computing device

In some examples, the upstream computing device may have received at least one frame of the fragment before the client device sends the request. In such examples, the portion of the fragment sent to the client device by the upstream computing device may include the at least one frame. Additionally, or in the alternative, the portion of the fragment sent to the client device may include the at least one frame as well as the metadata. Other examples are possible as well. This summary is not intended to identify critical or essential features of the disclosure, but merely to summarize certain features and variations thereof. Other details and features will be described in the sections that follow.

### BRIEF DESCRIPTION OF THE DRAWINGS

The accompanying drawings, which are incorporated in and constitute a part of this specification, together with the description, serve to explain the principles of the present methods and systems:
Figure 1 shows an example system;
Figure 2A shows an example workflow for content delivery;
Figure 2B shows an example workflow for content delivery;
Figure 3 shows an example system;
Figure 4 shows a flowchart for an example method;
Figure 5 shows a flowchart for an example method; and
Figure 6 shows a flowchart for an example method.

### DETAILED DESCRIPTION

As used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another configuration includes from the one particular value and/or to the other particular value. When values are expressed as approximations, by use of the antecedent "about," it will be understood that the particular value forms another configuration. It will be further understood that the endpoints of each of the ranges are significant both in relation to the other endpoint, and independently of the other endpoint.

"Optional" or "optionally" means that the subsequently described event or circumstance may or may not occur, and that the description includes cases where said event or circumstance occurs and cases where it does not.

Throughout the description and claims of this specification, the word "comprise" and variations of the word, such as "comprising" and "comprises," means "including but not limited to," and is not intended to exclude other components, integers, or steps. "Exemplary" means "an example of" and is not intended to convey an indication of a preferred or ideal configuration. "Such as" is not used in a restrictive sense, but for explanatory purposes.

It is understood that when combinations, subsets, interactions, groups, etc. of components are described that, while specific reference of each various individual and collective combinations and permutations of these may not be explicitly described, each is specifically contemplated and described herein. This applies to all parts of this application including, but not limited to, steps in described methods. Thus, if there are a variety of additional steps that may be performed it is understood that each of these additional steps may be performed with any specific configuration or combination of configurations of the described methods.

As will be appreciated by one skilled in the art, hardware, software, or a combination of software and hardware may be implemented. Furthermore, a computer program product on a computer-readable storage medium (e.g., non-transitory) having processor-executable instructions (e.g., computer software) embodied in the storage medium. Any suitable computer-readable storage medium may be utilized including hard disks, CD-ROMs, optical storage devices, magnetic storage devices, memristors, Non-Volatile Random Access Memory (NVRAM), flash memory, or a combination thereof.

Throughout this application, reference is made to block diagrams and flowcharts. It will be understood that each block of the block diagrams and flowcharts, and combinations of blocks in the block diagrams and flowcharts, respectively, may be implemented by processor-executable instructions. These processor-executable instructions may be loaded onto a general-purpose computer, special purpose computer, or other programmable data processing apparatus to produce a machine, such that the processor-executable instructions which execute on the computer or other programmable data processing apparatus create a device for implementing the functions specified in the flowchart block or blocks.

These processor-executable instructions may also be stored in a computer-readable memory that may direct a computer or other programmable data processing apparatus to function in a particular manner, such that the processor-executable instructions stored in the computer-readable memory produce an article of manufacture including processor-executable instructions for implementing the function specified in the flowchart block or blocks. The processor-executable instructions may also be loaded onto a computer or other programmable data processing apparatus to cause a series of operational steps to be performed on the computer or other programmable apparatus to produce a computer-implemented process such that the processor-executable instructions that execute on the computer or other programmable apparatus provide steps for implementing the functions specified in the flowchart block or blocks.

Accordingly, blocks of the block diagrams and flowcharts support combinations of devices for performing the specified functions, combinations of steps for performing the specified functions and program instruction means for performing the specified functions. It will also be understood that each block of the block diagrams and flowcharts, and combinations of blocks in the block diagrams and flowcharts, may be implemented by special purpose hardware-based computer systems that perform the specified functions or steps, or combinations of special purpose hardware and computer instructions.

"Content items," as the phrase is used herein, may also be referred to as "content," "content data," "content information," "content asset," "multimedia asset data file," or simply "data" or "information". Content items may be any information or data that may be licensed to one or more individuals (or other entities, such as business or group). Content may be electronic representations of video, audio, text, and/or graphics, which may be but is not limited to electronic representations of videos, movies, or other multimedia, which may be but is not limited to data files adhering to H.264/MPEG-AVC, H.265/MPEG-HEVC, H.266/MPEG-VVC, MPEG-5 EVC, MPEG-5 LCEVC, AV1, MPEG2, MPEG, MPEG4 UHD, SDR, HDR, 4k, Adobe^{®} Flash^{®} Video (.FLV), ITU-T H.261, ITU-T H.262 (MPEG-2 video), ITU-T H.263, ITU-T H.264 (MPEG-4 AVC), ITU-T H.265 (MPEG HEVC), ITU-T H.266 (MPEG VVC), AOM AV1, AOM AV2, VP8, VP9, or some other video file format, whether such format is presently known or developed in the future. The content items described herein may be electronic representations of music, spoken words, or other audio, which may be but is not limited to data files adhering to MPEG-1 audio, MPEG-2 audio, MPEG-2 and MPEG-4 advanced audio coding, MPEG-H, AC-3 (Dolby Digital), E-AC-3 (Dolby Digital Plus), AC-4, Dolby Atmos^{®}, DTS^{®}, and/or any other format configured to store electronic audio, whether such format is presently known or developed in the future. Content items may be any combination of the above-described formats.

"Consuming content" or the "consumption of content," as those phrases are used herein, may also be referred to as "accessing" content, "providing" content, "viewing" content, "listening" to content, "rendering" content, or "playing" content, among other things. In some cases, the particular term utilized may be dependent on the context in which it is used. Consuming video may also be referred to as viewing or playing the video. Consuming audio may also be referred to as listening to or playing the audio. This detailed description may refer to a given entity performing some action. It should be understood that this language may in some cases mean that a system (e.g., a computer) owned and/or controlled by the given entity is actually performing the action.

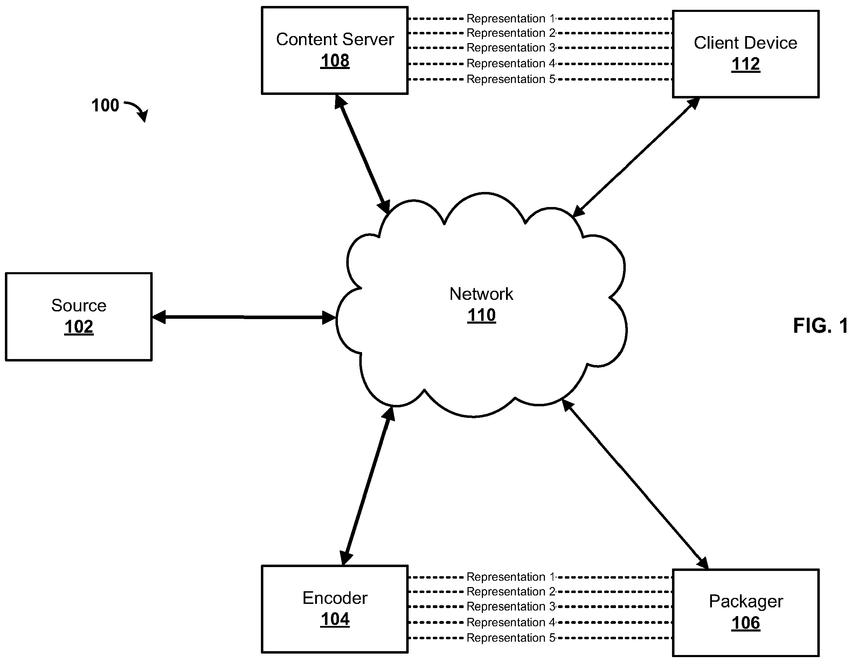

**FIG. 1** shows an example system **100** for improved content delivery. The system **100** may comprise a plurality of computing devices/entities in communication via a network **110.** The network **110** may be an optical fiber network, a coaxial cable network, a hybrid fiber-coaxial network, a wireless network, a satellite system, a direct broadcast system, an Ethernet network, a high-definition multimedia interface network, a Universal Serial Bus (USB) network, or any combination thereof. Data may be sent on the network **110** via a variety of transmission paths, including wireless paths (e.g., satellite paths, Wi-Fi paths, cellular paths, etc.) and terrestrial paths (e.g., wired paths, a direct feed source via a direct line, etc.). The network **110** may comprise public networks, private networks, wide area networks (e.g., Internet), local area networks, and/or the like. The network **110** may comprise a content access network, content distribution network, and/or the like. The network **110** may be configured to provide content from a variety of sources using a variety of network paths, protocols, devices, and/or the like. The content delivery network and/or content access network may be managed (e.g., deployed, serviced) by a content provider, a service provider, and/or the like. The network **110** may deliver content items from a source(s) to a client device(s)/user device(s).

The system **100** may comprise a source **102,** such as a server(s) or other computing device(s). The source **102** may receive source streams for a plurality of content items. The source streams may be live streams (e.g., a linear content stream) and/or video-on-demand (VOD) streams. The live streams may comprise, for example, low-latency ("LL") live streams. The source **102** may receive the source streams from an external server or device (e.g., a stream capture source, a data storage device, a media server, etc.). The source **102** may receive the source streams via a wired or wireless network connection, such as the network **110** or another network (not shown).

The source **102** may comprise a headend, a video-on-demand server, a cable modem termination system, and/or the like. The source **102** may provide content (e.g., video, audio, games, applications, data) and/or content items (e.g., video, streaming content, movies, shows/programs, etc.) to client devices (e.g., user devices). The source **102** may provide streaming media, such as live content, on-demand content (e.g., video-on-demand), content recordings, and/or the like. The source **102** may be managed by third-party content providers, service providers, online content providers, over-the-top content providers, and/or the like. A content item may be provided via a subscription, by individual item purchase or rental, and/or the like. The source **102** may be configured to provide content items via the network **110.** Content items may be accessed by client devices via applications, such as mobile applications, television applications, set-top box applications, gaming device applications, and/or the like. An application may be a custom application (e.g., by a content provider, for a specific device), a general content browser (e.g., a web browser), an electronic program guide, and/or the like. The source **102** may provide uncompressed content items, such as raw video data, comprising one or more portions (e.g., frames/slices, groups of pictures (GOP), coding units (CU), coding tree units (CTU), etc.). It should be noted that although a single source **102** is shown in **FIG. 1****,** this is not to be considered limiting. In accordance with the described techniques, the system **100** may comprise a plurality of sources **102,** each of which may receive any number of source streams.

The system **100** may comprise an encoder **104,** such as a video encoder, a content encoder, etc. The encoder **104** may be configured to encode one or more source streams (e.g., received via the source **102**) into a plurality of content items/streams at various bitrates (e.g., various representations). For example, the encoder **104** may be configured to encode a source stream for a content item at varying bitrates for corresponding representations (e.g., versions) of a content item for adaptive bitrate streaming. An encoded content item may include a plurality of frames (e.g., a series of frames/pictures/portions, etc.). The plurality of frames may comprise a plurality of I-slices, P-slices, and/or B-slices, each slice representing a rectangular area within a picture. An I-slice (e.g., an Intra-coded frame/picture) may include and/or represent a complete image/picture (or a rectangular area within it). A P-slice (e.g., a Predicted picture/delta frame) may comprise only the changes in an image from one or more previous frames. A B-slice (e.g., a Bidirectional predicted picture) may comprise only the differences between a current frame and both preceding and following frames (in presentation order).

As shown in **FIG. 1****,** the encoder **104** may encode a source stream into Representations 1-5. It is to be understood that the **FIG. 1** shows five representations for explanation purposes only. The encoder **104** may be configured to encode a source stream into fewer or greater representations. Representation 1 may be associated with a first resolution (e.g., 480p) and/or a first bitrate (e.g., 4 Mbps). Representation 2 may be associated with a second resolution (e.g., 720p) and/or a second bitrate (e.g., 5 Mbps). Representation 3 may be associated with a third resolution (e.g., 1080p) and/or a third bitrate (e.g., 6 Mbps). Representation 4 may be associated with a fourth resolution (e.g., 4K) and/or a first bitrate (e.g., 10 Mbps). Representation 5 may be associated with a fifth resolution (e.g., 8K) and/or a fifth bitrate (e.g., 15 Mbps). Other example resolutions and/or bitrates are possible.

The system **100** may comprise a packager **106.** The packager **106** may be configured to receive one or more content items/streams from the encoder **104.** The packager **106** may be configured to prepare content items/streams for distribution. For example, the packager **106** may be configured to convert encoded content items/streams into a plurality of content fragments. The packager **106** may be configured to provide content items/streams according to adaptive bitrate streaming. For example, the packager **106** may be configured to convert encoded content items/streams at various representations into one or more adaptive bitrate streaming formats, such as Apple HTTP Live Streaming (HLS), Microsoft Smooth Streaming, Adobe HTTP Dynamic Streaming (HDS), MPEG DASH, or any other media streaming format based on the TCP or QUIC transport protocol and/or the like which is driven by client requests. The packager **106** may pre-package content items/streams and/or provide packaging in real-time as content items/streams are requested by client devices, such as a client device **112.** The client device **112** may be a content/media player, a television, a computer, a set-top box, a smart device, a mobile device, a user device, etc.

The system **100** may comprise a content server **108.** The content server **108** may be configured to receive requests for content, such as content items/streams. The content server **108** may identify a location of a requested content item and provide the content item - or a portion thereof - to a device requesting the content, such as the client device **112.** The content server **108** may comprise a Hypertext Transfer Protocol (HTTP) Origin server using protocols such as HTTP/1.1, HTTP/2, or HTTP/3. The content server **108** may be configured to provide/facilitate a communication session with a requesting device, such as the client device **112,** based on HTTP, FTP, or other protocols. The content server **108** may be one of a plurality of content server distributed across the system **100.** The content server **108** may be located in a region proximate to the client device **112.** A request for a content stream/item from the client device **112** may be directed to the content server **108** (e.g., due to the location and/or network conditions). The content server **108** may be configured to deliver content streams/items to the client device **112** in a specific format requested by the client device **112.** The content server **108** may be configured to provide the client device **112** with a manifest file (e.g., or other index file describing portions of the content) corresponding to a content stream/item. The content server **108** may be configured to provide streaming content (e.g., unicast, multicast) to the client device **112.** The content server **108** may be configured to provide a file transfer and/or the like to the client device **112.** The content server **108** may cache or otherwise store content (e.g., frequently requested content) to enable faster delivery of content items to users.

The content server **108** may receive a request for a content item, such as a request for high-resolution video and/or the like. The content server **108** may receive requests for content items from the client device **112.** As further described herein, the content server **108** may be capable of sending (e.g., to the client device **112**) one or more portions of a requested content item at varying bitrates (e.g., Representations 1-5). For example, the client device **112** (or another device of the system **100**) may request that the content server **108** send Representation 1 based on a first set of network conditions (e.g., estimate of available bandwidth, throughput, etc.). As another example, the client device **112** (or another device of the system **100**) may request that the content server **108** send Representation 5 based on a second set of network conditions (e.g., higher-levels of bandwidth, throughput, etc.). The content server **108** may receive encoded/packaged portions of the requested content item from the encoder **104** and/or the packager **106** and send (e.g., provide, serve, transmit, etc.) the encoded/packaged portions of the requested content item to the client device **112.**

The system **100** may use various protocols, such as DASH-LL, LL-HLS, L3D-DASH, and/or, Smooth Streaming for serving content items (e.g., for low-latency live streaming) to requesting devices, such as the client device **112.** For example, the encoder **104** may generate ISO-BMFF fragments possibly constituting CMAF chunks or relating to a given content item. A CMAF segment (or simply a "segment") may comprise sequences of one or more consecutive ISO-BMFF fragments (as defined in ISO/IEC 14496-12) from a track of the content, while a CMAF chunk (or simply a "chunk" or a "fragment") may comprise sequential subsets of media samples from a particular fragment and is a single ISO-BMFF fragment. The encoder **104** may encode 6-second (or any other quantity of time) CMAF segments comprising 0.5-second (or any other quantity of time) CMAF chunks. The client device **112** may send requests for CMAF segments of content, and the content server **108** may send each CMAF segment chunk-by-chunk using, for example, HTTP/1.1 chunked transfer encoding method or sending individual HTTP frames for HTTP/2 and HTTP/3.

In some scenarios, the client device **112** may request a segment of content that is not yet available for delivery (e.g., not yet encoded and/or packaged). For example, the client device **112** may send a request for a first segment at a first representation, such as Representation 1 discussed herein, but the encoder **104** may not have encoded that segment yet and/or the packager **106** may not have packaged that segment yet. Existing systems may respond to such a request by sending the client device **112** an error message and/or an indication that the request cannot be fulfilled. The error message in some examples may be an HTTP 404 message, and some existing systems may cache such responses (HTTP 404 messages) according to a network/security protocol intended to prevent distributed denial of service attacks (DDoS attacks). The error message and/or the indication that the request cannot be fulfilled may cause the client device **112** to retry the request at a later time, send the request to an alternative source, and/or send a request for an alternative version of the segment (e.g., one of Representations 2-5).

These remedial actions taken by the client device **112** introduce latency and/or other delivery-related issues. The system **100** may be configured to prevent such latency and/or other delivery-related issues in this scenario, such as by utilizing improved adaptation logic to prevent the client device **112** from taking unnecessary remedial actions when requesting a segment "too early" (e.g., before it is ready for delivery). As an example, to prevent the error message (e.g., HTTP 404 message) from being cached, which may cause further requests for the first segment at the first representation to receive the same cached error message, metadata may be added to a header(s) and/or body of the error message to notify upstream devices within the system **100** (relative to the client device **112**) of an upcoming start time and/or availability time associated with the segment (e.g., similar to the information/data added to the manifest file further described herein).

In some example configurations of the system **100,** when the client device **112** sends a request for a segment within a threshold amount of time before the segment is scheduled to be available for delivery (e.g., encoded and packaged), the content server **108** may send an error message and/or instruct the client device **112** to synchronize its clock. The client device **112** may have sent the untimely request for the segment when its clock or related mechanism is out of synch with the content server **108** and/or other devices of the system **100** that are upstream relative to the client device **112** (e.g., closer to the source **102**). The content server **108** may determine whether a difference between a scheduled time that the segment is to be available and the time that the request was received meets or exceeds the threshold amount of time. The scheduled time that the segment is to be available may be determined by the content server **108,** for example, using the manifest file. Other examples are possible as well. The threshold amount of time may be configurable. For example, the threshold amount of time may be based on an expected amount of time the client device **112** would require to synchronize its clock (e.g., with the content server **108**) and/or to request an alternative representation of the segment, which may be scheduled to be available earlier.

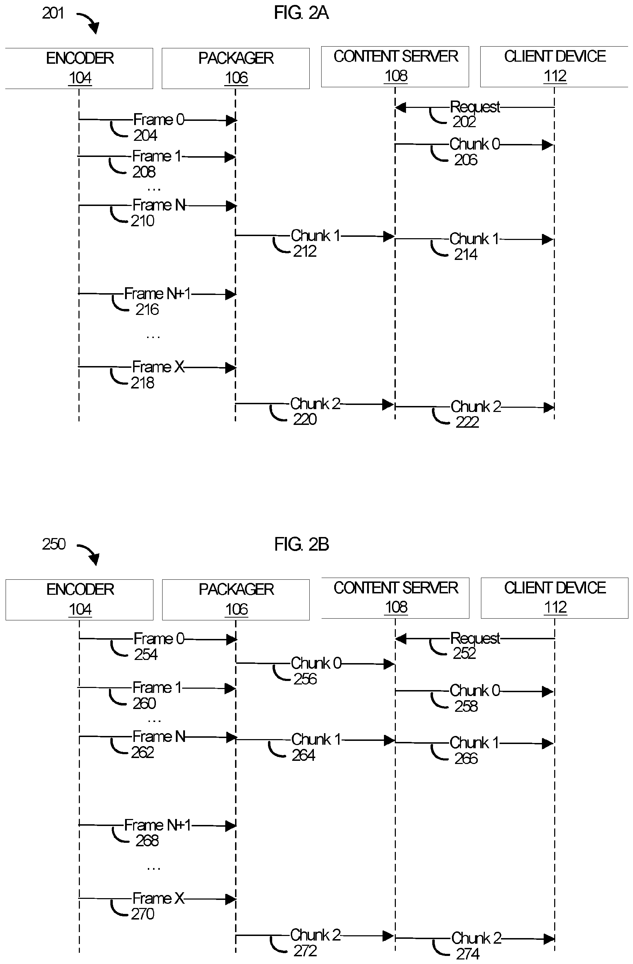

In example configurations of the system **100** where the threshold amount of time is not used, or in examples where the difference between the scheduled time that the segment is to be available and the time that the request was received falls below the threshold amount of time, the client device **112** may not receive an error message and/or indication that the request cannot be fulfilled. Instead, the content server **108** (or another upstream computing device) may send at least a portion of a fragment of the segment to the client device **112.** **FIG. 2A** shows an example workflow **201** for content delivery in such a scenario.

As shown in **FIG. 2A****,** the content server **108** may receive a request for a segment of content at **202.** The content may be, for example, linear content, live content, pre-recorded content served as live, etc. The segment may comprise a plurality of fragments, and each fragment may comprise at least one chunk. A first fragment of the segment may comprise, for example, two chunks: Chunk 1 and Chunk 2 as shown in **FIG. 2A****.** The first fragment may comprise a plurality of frames: Frame 0 through Frame X, as shown in **FIG. 2A****.** Chunk 1 may include Frame 0, Frame 1, and Frame N; and Chunk 2 may include Frame N+1 through Frame X.

The content server **108** may receive the request from the client device **112.** The request sent at **202** by the client device **112** may be received by the content server **108** before the encoder **104** sends the frames for Chunk 1 to the packager **106.** As a result, the content server **108** may not be able to respond to the request with Chunk 1 (e.g., Frame 0, Frame 1, and Frame N). That is, the content server **108** may determine that the first fragment is unavailable. The content server **108** may determine that the first fragment is unavailable based on the request. For example, the request may identify the content, which may be associated with a manifest file (e.g., a media presentation description (MPD) or an HLS playlist (m3u8) file). The manifest file may indicate a start time or availability time associated with the segment. The start time or availability time may be defined as absolute wall-clock time window during which client devices are permitted/able to receive the segment (e.g., a range/window of time during which the segment is available but may no longer be available outside/after the range/window of time). The content server **108** may determine that the first fragment is unavailable based on the start time (or availability time) and a current time, clock time, synchronization time, etc., associated with the content. Other examples are possible as well.

Instead of sending an error message or otherwise indicating to the client device **112** that the request cannot be fulfilled, the content server **108** may send a first portion of the first fragment to the client device **112,** which is shown in **FIG. 2A** as "Chunk 0" at **206.** The content server **108** may determine the first portion of the first fragment (Chunk 0). For example, the content server **108** may generate, retrieve, obtain, etc., the first portion of the first fragment. The content server **108** may determine the first portion of the first fragment based on (e.g., in response to) the first fragment being unavailable. The content server **108** may determine the first portion of the first fragment based on the manifest file associated with the content. For example, the manifest file may comprise metadata associated with the segment. The first portion of the first fragment may comprise at least a portion of the metadata associated with the segment.

The metadata may comprise a segment type indicator, such as a Segment Type Box ("styp"). The segment type may indicate information about the segment, such as its compliance with a version of the ISO-BMFF specification, DASH, CMAF, a particular CMAF media profile, a combination thereof, and/or the like. The segment type may be indicated in the manifest file or it may be determined (e.g., by the content server **108)** based on the manifest file and/or other information available regarding the content. The metadata may comprise an event message(s), such as an Event Message ("emsg"). The event message(s) may include payloads such as a SCTE 35 cue message, an ID3v2 payload, an MPD Validity Expiration, a combination thereof, and/or the like. The event message(s) may be indicated in the manifest file or may be determined (e.g., by the content server **108**) based on the manifest file and/or other information available regarding the content. The metadata may comprise a captions-related information ("captions information" or "captions data"), such as information/metadata associated with Timed Text Markup Language (TTML) Segment Info. The captions information that may be sent as metadata may include namespace declarations for the TTML segment (e.g., XML declarations) that corresponds to the requested segment (e.g., the audio/video segment). The captions information may be indicated in the manifest file, a separate file, a separate stream, etc., and/or may be determined (e.g., by the content server **108**) based on the manifest file and/or other information available regarding the content.

Returning to **FIG. 2A****,** the content server **108** may send the first portion of the first fragment (Chunk 0) at **206.** Chunk 0 may comprise at least a portion of the metadata associated with the segment. The client device **112** may receive Chunk 0 and may decode, store, output, etc., the first portion of the first fragment. That is, even though Chunk 0 may not contain any frames of the segment that was requested, sending Chunk 0 to the client device **112** instead of an error message or indication that the request cannot be fulfilled may prevent the client device **112** from taking any unnecessary remedial action(s) as described herein.

The packager **106** may receive Frame 0 at **204,** Frame 1 at **208,** and Frame N at **210.** The packager **106** may send Chunk 1 (e.g., Frame 0, Frame 1, and Frame N) to the content server **108** at **212.** The content server **108** may then send Chunk 1 to the client device **112** at **214.** The packager **106** may receive Frame N+1 at **216** and Frame X (e.g., the last frame of the first fragment) at **218.** The packager **106** may send Chunk 2 (e.g., Frame N+1 through Frame X) to the content server **108** at **220.** The content server **108** may then send Chunk 2 to the client device **112** at **220.**

In some examples, the packager **106** (or the content server **108)** may determine that Frame 0, Frame 1, and Frame N - collectively - satisfy a threshold for sending those frames as Chunk 1. For example, the threshold may be associated with a maximum fragment duration, and the frames may comprise (e.g., collectively) a duration that is nearly equal to, but less than, the maximum fragment duration. The maximum fragment duration may be dynamic or static. Additionally, or in the alternative, the threshold may be associated with a maximum fragment size, and the frames may comprise (e.g., collectively) a size that is nearly equal to, but less than, the maximum fragment size. The maximum fragment size may be dynamic or static. These frames may be sent as Chunk 1 when either the maximum fragment duration or the maximum fragment size are met. For example, if the frames collectively meet or exceed the maximum fragment duration (e.g., 500 milliseconds) but do not meet or exceed the maximum fragment size, the frames may nonetheless be sent as Chunk 1, and an end boundary for Chunk 1 may be set at a frame boundary of the last frame prior to the maximum fragment duration being met or exceeded (e.g., at an end boundary of Frame N). As another example, if the frames collectively meet the maximum fragment size (e.g., 42Kb of frames) but do not meet or exceed the maximum fragment duration, the frames may nonetheless be sent as Chunk 1, and the end boundary for Chunk 1 may be set at a boundary of a next access unit (e.g., a network abstraction layer unit) that would cause the aggregate size of the frames to exceed the maximum fragment size. It should be noted that the packager **106** (or the content server **108)** may determine that Frame N+1 and Frame X - collectively - satisfy the threshold for sending those frames as Chunk 2 in a similar manner as discussed above regarding Frame 0, Frame 1, and Frame N for Chunk 1. Similarly, instead of a chunk in HTTP/1.1, data frames may be sent in HTTP/2 or HTTP/3. While the discussion below is written in terms of HTTP chunks, same applies to HTTP/2 and HTTP/3 data frames. Additionally, data frames carrying such metadata may be compressed with a lossless algorithm such as deflate, gzip, or brotli.

As discussed herein, the first portion of the first fragment (Chunk 0) may comprise the captions information for the first fragment (e.g., Frame 0 through Frame N). The captions information for the first fragment may comprise, for example, information associated with a TTML segment or a portion thereof, such as XML namespace declarations. The next chunk (Chunk 1) may comprise the captions data itself. For example, Chunk 1 may comprise the TTML segment or the portion thereof for the first fragment. Additionally, as discussed herein, the first portion of the first fragment (Chunk 0) may comprise at least a portion of the metadata associated with the segment. The metadata, in some examples, may comprise information (e.g., styp, emsg, etc.) related audio that corresponds to the first fragment (or a portion thereof), such as audio corresponding to Frame 0, Frame 1, and Frame N. When the next chunk is sent (Chunk 1), one or more audio frames may be sent as well. For example, the one or more audio frames sent with Chunk 1 may comprise audio corresponding to Frame 0, Frame 1, and Frame N.

**FIG. 2B** shows an example workflow **250** for content delivery that largely corresponds to the workflow **201.** As shown in **FIG. 2B****,** the content server **108** may receive a request for a segment of content at **252.** The content may be, for example, linear content, live content, pre-recorded content served as live, etc. The segment may comprise a plurality of fragments, and each fragment may comprise at least one chunk. A first fragment of the segment may comprise, for example, three chunks: Chunk 0, Chunk 1, and Chunk 2 as shown in **FIG. 2B****.** In contrast to Chunk 0 as described above regarding the workflow **201,** Chunk 0 in the workflow **250** may comprise at least one frame of the segment. For example, Chunk 0 may comprise Frame 0, such as an intra-coded frame, or a portion thereof (e.g., an independently coded portion of the intra-coded frame). Additionally, or in the alternative, Chunk 0 may comprise one or more audio frames that correspond to one or more video frames that are sent with that chunk (e.g., an audio frame corresponding to video Frame 0). The encoder **104** may send Chunk 0 to the packager **106** before the client device **112** sends the request for the segment of content at **252.** Chunk 1 may include Frame 1 and Frame N in the workflow **252.** Chunk 1 may also include any corresponding audio frames and/or captions information/data associated with Frame 1 and/or Frame N. Chunk 2 may include Frame N+1 through Frame X. Chunk 2 may also include any corresponding audio frames and/or captions information/data associated with Frame N+1 through Frame X.

As noted above, the request sent at **252** by the client device **112** may be received by the content server **108** after the encoder **104** sends Frame 0 for Chunk 1 to the packager **106.** Thus, in contrast to the workflow **201,** the content server **108** in the workflow **250** may determine that at least a portion of the first fragment of the segment - Frame 0 - is available for delivery to the client device **112.** The content server **108** may determine that Frame 0 is available based on the request. For example, the manifest file may indicate a start time or availability time associated with the segment, and Frame 0 may be the first frame in the segment. The content server **108** may determine that Frame 0 is available based on the start time (or availability time) and a current time, clock time, synchronization time, etc., associated with the content (e.g., based on the manifest file). The content server **108** may have already received Frame 0 from the packager **108** prior to receiving the request at **252.** In other examples, the content server **108** may request Frame 0 from the packager **108.** Other examples are possible as well. The packager **108,** for example, may send Frame 0 as Chunk 0 to the content server **108** at **256,** and the content server **108** may respond to the request received from the client device **112** by sending Chunk 0 to the client device **112** at **258.** It should be noted that Chunk 0 may comprise Frame 0 as well as any of the metadata described above regarding the workflow **201.**

The client device **112** may receive Chunk 0 at **258** and may decode, store, output, etc., the first portion of the first fragment (e.g., Frame 0 and any metadata sent therewith as Chunk 0). The packager **106** may receive Frame 1 at **260** and Frame N at **262.** The packager **106** may send Chunk 1 (e.g., Frame 1 and Frame N) to the content server **108** at **264.** The content server **108** may then send Chunk 1 to the client device **112** at **266.** The packager **106** may receive Frame N+1 at **268** and Frame X (e.g., the last frame of the first fragment) at **270.** The packager **106** may send Chunk 2 (e.g., Frame N+1 through Frame X) to the content server **108** at **272.** The content server **108** may then send Chunk 2 to the client device **112** at **274.**

Similar to the workflow **201,** in some examples of the workflow **250** the packager **106** (or the content server **108**) may determine that Frame 1 and Frame N - collectively - satisfy a threshold for sending those frames as Chunk 1. For example, the threshold may be associated with the maximum fragment duration discussed above, and the frames may comprise (e.g., collectively) a duration that is nearly equal to, but less than, the maximum fragment duration. The maximum fragment duration may be dynamic or static. Additionally, or in the alternative, the frames may comprise (e.g., collectively) a size that is nearly equal to, but less than, the maximum fragment size discussed above, which may be dynamic or static. These frames may be sent as Chunk 1 when either the maximum fragment duration or the maximum fragment size are met. For example, if the frames collectively meet or exceed the maximum fragment duration (e.g., 500 milliseconds) but do not meet or exceed the maximum fragment size, the frames may nonetheless be sent as Chunk 1, and an end boundary for Chunk 1 may be set at a frame boundary of the last frame prior to the maximum fragment duration being met or exceeded (e.g., at an end boundary of Frame N). As another example, if the frames collectively meet the maximum fragment size (e.g., 42Kb of frames) but do not meet or exceed the maximum fragment duration, the frames may nonetheless be sent as Chunk 1, and the end boundary for Chunk 1 may be set at a boundary of a next access unit (e.g., a network abstraction layer unit) that would cause the aggregate size of the frames to exceed the maximum fragment size. It should be noted that the packager **106** (or the content server **108**) may determine that Frame N+1 and Frame X - collectively - satisfy the threshold for sending those frames as Chunk 2 in a similar manner as discussed above regarding Frame 1 and Frame N for Chunk 1.

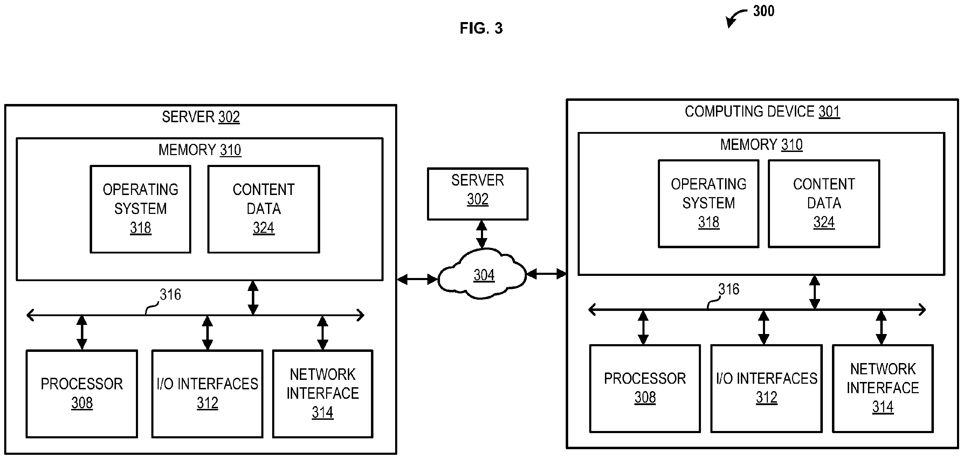

The present methods and systems may be computer-implemented. **FIG. 3** shows a block diagram depicting a system/environment **300** comprising non-limiting examples of a computing device **301** and a server **302** connected through a network **304.** Either of the computing device **301** or the server **302** may be a computing device, such as any of the devices of the system **100** shown in **FIG. 1****.** In an aspect, some or all steps of any described method may be performed on/by a computing device as described herein. The computing device **301** and/or the server **302** may comprise one or multiple computers configured to store content data **324** (e.g., manifest files, chunks, fragments, segments, metadata, etc.), Multiple servers **302** may communicate with the computing device **301** via or through the network **304.**

The computing device **301** and the server **302** may be a digital computer that, in terms of hardware architecture, generally includes a processor **308,** system memory **310,** input/output (I/O) interfaces **312,** and network interfaces **314.** These components **(308, 310, 312,** and **314)** are communicatively coupled via a local interface **316.** The local interface **316** may be, for example, but not limited to, one or more buses or other wired or wireless connections, as is known in the art. The local interface **316** may have additional elements, which are omitted for simplicity, such as controllers, buffers (caches), drivers, repeaters, and receivers, to enable communications. Further, the local interface may include address, control, and/or data connections to enable appropriate communications among the aforementioned components.

The processor **308** may be a hardware device for executing software, particularly that stored in system memory **310.** The processor **308** may be any custom made or commercially available processor, a central processing unit (CPU), an auxiliary processor among several processors associated with the computing device **301** and the server **302,** a semiconductor-based microprocessor (in the form of a microchip or chip set), or generally any device for executing software instructions. When the computing device **301** and/or the server **302** is in operation, the processor **308** may execute software stored within the system memory **310,** to communicate data to and from the system memory **310,** and to generally control operations of the computing device **301** and the server **302** pursuant to the software.

The I/O interfaces **312** may be used to receive user input from, and/or for providing system output to, one or more devices or components. User input may be provided via, for example, a keyboard and/or a mouse. System output may be provided via a display device and a printer (not shown). I/O interfaces **312** may include, for example, a serial port, a parallel port, a Small Computer System Interface (SCSI), an infrared (IR) interface, a radio frequency (RF) interface, and/or a universal serial bus (USB) interface.

The network interface **314** may be used to transmit and receive from the computing device **301** and/or the server **302** on the network **304.** The network interface **314** may include, for example, a 10BaseT Ethernet Adaptor, a 10BaseT Ethernet Adaptor, a LAN PHY Ethernet Adaptor, a Token Ring Adaptor, a wireless network adapter (e.g., WiFi, cellular, satellite), or any other suitable network interface device. The network interface **314** may include address, control, and/or data connections to enable appropriate communications on the network **304.**

The system memory **310** may include any one or combination of volatile memory elements (e.g., random access memory (RAM, such as DRAM, SRAM, SDRAM, etc.)) and nonvolatile memory elements (e.g., ROM, hard drive, tape, CDROM, DVDROM, etc.). Moreover, the system memory **310** may incorporate electronic, magnetic, optical, and/or other types of storage media. Note that the system memory **310** may have a distributed architecture, where various components are situated remote from one another, but may be accessed by the processor **308.**

The software in system memory **310** may include one or more software programs, each of which comprises an ordered listing of executable instructions for implementing logical functions. In the example of **FIG. 3****,** the software in the system memory **310** of the computing device **301** may comprise the content data **324** and a suitable operating system (O/S) **318.** In the example of **FIG. 3****,** the software in the system memory **310** of the server **302** may comprise the content data **324** and a suitable operating system (O/S) **318.** The operating system **318** essentially controls the execution of other computer programs and provides scheduling, input-output control, file and data management, memory management, and communication control and related services.

For purposes of illustration, application programs and other executable program components such as the operating system **318** are shown herein as discrete blocks, although it is recognized that such programs and components may reside at various times in different storage components of the computing device **301** and/or the server **302.** An implementation of the system/environment **300** may be stored on or transmitted across some form of computer readable media. Any of the disclosed methods may be performed by computer readable instructions embodied on computer readable media. Computer readable media may be any available media that may be accessed by a computer. By way of example and not meant to be limiting, computer readable media may comprise "computer storage media" and "communications media." "Computer storage media" may comprise volatile and non-volatile, removable and non-removable media implemented in any methods or technology for storage of information such as computer readable instructions, data structures, program modules, or other data. Exemplary computer storage media may comprise RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which may be used to store the desired information and which may be accessed by a computer.

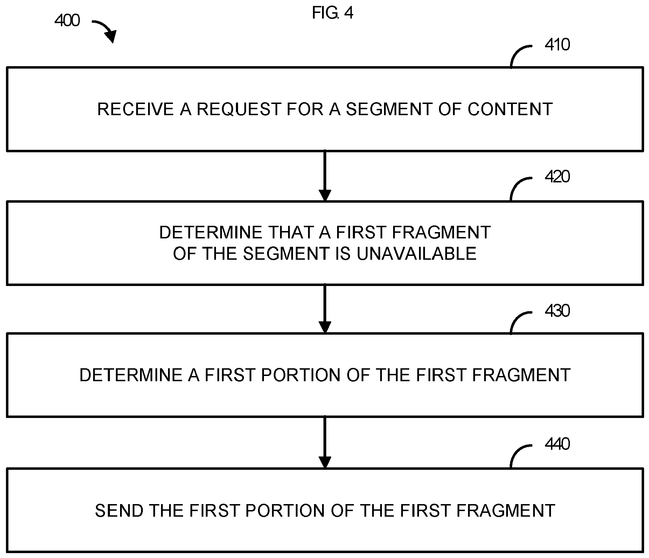

**FIG. 4** shows a flowchart of an example method **400** for improved content delivery. The method **400** may be performed in whole or in part by a single computing device, a plurality of computing devices, and the like. For example, the steps of the method **400** may be performed by the content server **108** shown in **FIG. 1** and/or a computing device in communication with the content server **108.** Some steps of the method **400** may be performed by a first computing device (e.g., the content server **108**), while other steps of the method **400** may be performed by another computing device.

At step **410,** the computing device may receive a request for a segment of content. The content may be, for example, linear content, live content, pre-recorded content served as live, etc. The computing device may receive the request from a client device (e.g., the client device **112**). The segment may comprise a plurality of fragments. At step **420,** the computing device may determine that a first fragment of the plurality of fragments is unavailable. The computing device may determine that the first fragment is unavailable based on the request. For example, the request may identify the content, which may be associated with a manifest file (e.g., a media presentation description (MPD) file). The manifest file may indicate a start time or availability time associated with the segment. The computing device may determine that the first fragment is unavailable based on the start time (or availability time) and a current time, clock time, synchronization time, etc., associated with the content.

The first fragment may be associated with a plurality of frames of the segment. The computing device may determine that the first fragment is unavailable based on an unavailability of the plurality of frames. For example, the computing device may determine that a packaging device (e.g., the packager **106**) has not yet packaged and/or sent the plurality of frames to the computing device. The computing device may determine that the packaging device has not yet packaged and/or sent the plurality of frames based on the start time (or availability time) and the current time, clock time, synchronization time, etc., associated with the content. Other examples are possible as well.

At step **430,** the computing device may determine a first portion of the first fragment. For example, the computing device may generate, retrieve, obtain, etc., the first portion of the first fragment. The computing device may determine the first portion of the first fragment based on (e.g., in response to) the first fragment being unavailable. The computing device may determine the first portion of the first fragment based on the manifest file associated with the content. For example, the manifest file may comprise metadata associated with the segment, and the first portion of the first fragment may comprise at least a portion of the metadata associated with the segment. The metadata may comprise at least one of: a segment type, an event message, or captions information associated with the segment.

At step **440,** the computing device may send the first portion of the first fragment. For example, the computing device may send the first portion of the first fragment to the client device. The computing device may send the first portion of the first fragment as at least one CMAF chunk. The client device may receive the first portion of the first fragment. The client device may decode, store, output, etc., the first portion of the first fragment.

The computing device may receive at least one frame of the segment. For example, the computing device may receive the at least one frame of the segment after the first portion of the first fragment was sent to the client device. The computing device may receive the at least one frame of the segment from the packaging device. The at least one frame may comprise an intra-coded frame or a portion thereof (e.g., an independently coded portion of the intra-coded frame). The computing device may send a second fragment of the plurality of fragments (or another portion of the first fragment) to the client device. The second fragment (or the other portion of the first fragment) may comprise the at least one frame.

The computing device may receive a plurality of frames of the segment. For example, the computing device may receive the plurality of frames from the packaging device. The computing device may determine that the plurality of frames satisfy a threshold. For example, the threshold may be associated with a maximum fragment duration, and the plurality of frames may comprise (e.g., collectively) a duration that is nearly equal to, but less than, the maximum fragment duration. Additionally, or in the alternative, the threshold may be associated with a maximum fragment size, and the plurality of frames may comprise (e.g., collectively) a size that is nearly equal to, but less than, the maximum fragment size. The computing device may send the plurality of frames to the client device. For example, the computing device may send the plurality of frames as a further fragment of the plurality of fragments. The computing device may send the further fragment as at least one CMAF chunk.

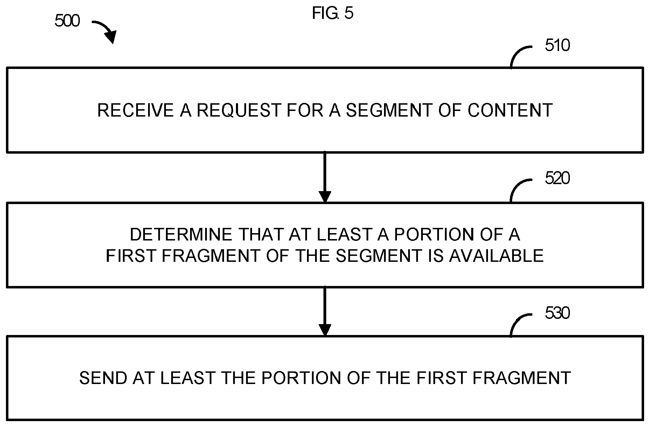

**FIG. 5** shows a flowchart of an example method **500** for improved content delivery. The method **500** may be performed in whole or in part by a single computing device, a plurality of computing devices, and the like. For example, the steps of the method **500** may be performed by the content server **108** shown in **FIG. 1** and/or a computing device in communication with the content server **108.** Some steps of the method **500** may be performed by a first computing device (e.g., the content server **108**), while other steps of the method **500** may be performed by another computing device.

At step **510,** the computing device may receive a request for a segment of content. The content may be, for example, linear content, live content, pre-recorded content served as live, etc. The computing device may receive the request from a client device (e.g., the client device **112**). The segment may comprise a plurality of fragments. At step **520,** the computing device may determine that at least a portion of a first fragment of the plurality of fragments is available. The computing device may determine that the at least the portion of the first fragment is available based on the request. For example, the request may identify the content, which may be associated with a manifest file (e.g., a media presentation description (MPD) file). The manifest file may indicate a start time or availability time associated with the segment.

The computing device may determine that at least the portion of the first fragment is available based on the start time (or availability time) and a current time, clock time, synchronization time, etc., associated with the content (e.g., based on the manifest file). For example, the first fragment may comprise a plurality of frames, and the computing device may determine that at least one frame of the plurality of frames is available based on the start time (or availability time) and the current time, clock time, synchronization time, etc., associated with the content (e.g., based on the manifest file). The at least one frame may comprise an intra-coded frame or a portion thereof (e.g., an independently coded portion of the intra-coded frame). In some examples, the computing device may have already received the at least one frame (e.g., from the packager **108**). In other examples, the computing device may request the at least one frame (e.g., from the packager **108**). Other examples are possible as well.

At step **530,** the computing device may send at least the portion of the first fragment. The computing device may send at least the portion of the first fragment based on (e.g., in response to) the portion of the first fragment being available (e.g., the at least one frame being available). The computing device may send the portion of the first fragment as at least one CMAF chunk. The portion of the first fragment may comprise the at least one frame and/or metadata associated with the segment. For example, the manifest file may comprise metadata associated with the segment, and the portion of the first fragment may comprise at least a portion of the metadata associated with the segment. The metadata may comprise at least one of: a segment type, an event message, or captions information associated with the segment. The client device may receive at least the portion of the first fragment. The client device may decode, store, output, etc., the portion of the first fragment.

The computing device may receive the remainder of the plurality of frames of the segment. For example, the computing device may receive the remainder of the plurality of frames after the portion of the first fragment was sent to the client device. The computing device may receive the remainder of the plurality of frames from the packaging device. The computing device may send a second portion of the first fragment to the client device. The second portion of the first fragment may comprise the remainder of the plurality of frames. The computing device may send the second portion of the first fragment as at least one CMAF chunk.

The computing device may send the second portion of the first fragment to the client device based on the remainder of the plurality of frames satisfying a threshold. For example, the threshold may be associated with a maximum fragment duration, and the remainder of the plurality of frames may comprise (e.g., collectively) a duration that is nearly equal to, but less than, the maximum fragment duration. Additionally, or in the alternative, the threshold may be associated with a maximum fragment size, and the remainder of the plurality of frames may comprise (e.g., collectively) a size that is nearly equal to, but less than, the maximum fragment size.

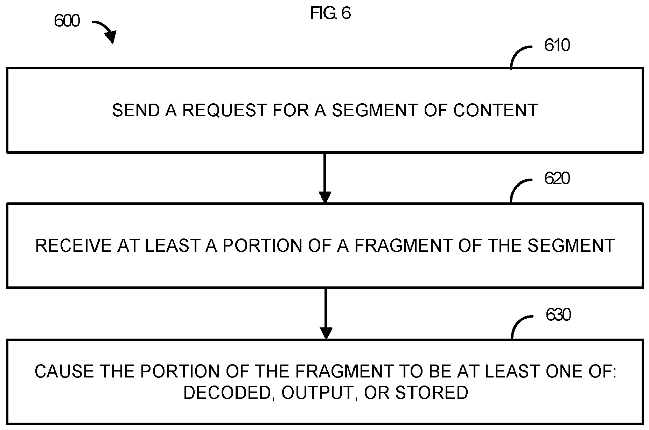

**FIG. 6** shows a flowchart of an example method **600** for improved content delivery. The method **600** may be performed in whole or in part by a single computing device, a plurality of computing devices, and the like. For example, the steps of the method **600** may be performed by the client device **112** shown in **FIG. 1** and/or a computing device in communication with the client device **112.** Some steps of the method **600** may be performed by a first computing device (e.g., the client device **112**), while other steps of the method **600** may be performed by another computing device.

At step **610,** the computing device may send a request for a segment of content. The content may be, for example, linear content, pre-recorded content served as live, live content, etc. The segment may comprise a plurality of fragments. The computing device may send the request to an upstream computing device (e.g., the content server **108**).

In some examples, the upstream computing device may determine that at least a portion of a first fragment of the plurality of fragments is available. The upstream computing device may determine that at least the portion of the first fragment is available based on the request. For example, the request may identify the content, which may be associated with a manifest file (e.g., a media presentation description (MPD) file). The manifest file may indicate a start time or availability time associated with the segment. The upstream computing device may determine that at least the portion of the first fragment is available based on the start time (or availability time) and a current time, clock time, synchronization time, etc., associated with the content (e.g., based on the manifest file). For example, the first fragment may comprise a plurality of frames, and the upstream computing device may determine that at least one frame of the plurality of frames is available based on the start time (or availability time) and the current time, clock time, synchronization time, etc., associated with the content (e.g., based on the manifest file). The at least one frame may comprise an intra-coded frame or a portion thereof (e.g., an independently coded portion of the intra-coded frame). In some examples, the upstream computing device may have already received the at least one frame (e.g., from the packager **108**). In other examples, the computing device may request the at least one frame (e.g., from the packager **108**). Other examples are possible as well.

In other examples, the upstream computing device may determine that the first fragment is unavailable. The upstream computing device may determine that the first fragment is unavailable based on the manifest file. For example, the upstream computing device may determine that the first fragment is unavailable based on the start time (or availability time) and the current time, clock time, synchronization time, etc., indicated in the manifest file. The upstream computing device may determine that the first fragment is unavailable based on an unavailability of the plurality of frames. For example, the upstream computing device may determine that a packaging device (e.g., the packager **106**) has not yet packaged and/or sent the plurality of frames to the upstream computing device. The upstream computing device may determine that the packaging device has not yet packaged and/or sent the plurality of frames based on the start time (or availability time) and the current time, clock time, synchronization time, etc., associated with the content. Other examples are possible as well.

The upstream computing device may determine at least a portion of the first fragment. For example, the upstream computing device may generate, retrieve, obtain, etc., at least the portion of the first fragment. In examples where the upstream computing device determines that the first fragment is unavailable, the portion of the first fragment may comprise metadata associated with the segment. The metadata associated with the segment may be based on and/or indicated by the manifest file. The metadata may comprise at least one of: a segment type, an event message, or captions information associated with the segment. In examples where the upstream computing device determines that the first fragment is available (e.g., the at least one frame is available), the portion of the first fragment may comprise the at least one frame in addition to the metadata associated with the segment.

At step **620,** the computing device may receive at least the portion of the first fragment. For example, the computing device may receive at least the portion of the first fragment from the upstream computing device. The computing device may receive at least the portion of the first fragment as at least one CMAF chunk. The computing device may decode, store, output, etc., the portion of the first fragment. At step **630,** the computing device may cause the portion of the first fragment to be at least one of: decoded, output, or stored.

While specific configurations have been described, it is not intended that the scope be limited to the particular configurations set forth, as the configurations herein are intended in all respects to be possible configurations rather than restrictive. Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; the number or type of configurations described in the specification.

It will be apparent to those skilled in the art that various modifications and variations may be made without departing from the scope or spirit. Other configurations will be apparent to those skilled in the art from consideration of the specification and practice described herein. It is intended that the specification and described configurations be considered as exemplary only, with a true scope and spirit being indicated by the following claims.

## Claims

1. A method comprising:
receiving, by a computing device from a client device, a request for a segment of content, wherein the segment comprises a plurality of fragments;
determining, based on the request, that a manifest file associated with the content indicates a start time or availability time associated with the segment;
determining, based on the start time or availability time, that a first fragment of the plurality of fragments is unavailable;
determining, based on the first fragment being unavailable, and based on the manifest file, a first portion of the first fragment, wherein the manifest file comprises metadata associated with the segment; and
sending, to the client device, the first portion of the first fragment, wherein the first portion of the first fragment comprises at least a portion of the metadata associated with the segment.

2. The method of claim 1, wherein the first fragment is associated with a plurality of frames of the segment, and wherein determining that the first fragment is unavailable comprises determining that the plurality of frames are not yet at least one of: encoded or packaged.

3. The method of any one of the preceding claims, wherein the metadata comprises at least one of: a segment type, an event message, or captions information associated with the segment.

4. The method of any one of the preceding claims, further comprising:
receiving, from a packaging device, at least one frame of the segment; and
sending, to the client device, a second fragment of the plurality of fragments, wherein the second fragment comprises the at least one frame.

5. The method of claim 4, wherein the at least one frame comprises an intra-coded frame or a portion thereof.

6. The method of any one of the preceding claims, further comprising:
receiving, from a packaging device, a plurality of frames of the segment; and
sending, based on the plurality of frames satisfying a threshold, a second fragment of the plurality of fragments to the client device, wherein the second fragment comprises the plurality of frames.

7. The method of claim 6, wherein the threshold is associated with a maximum fragment duration or a maximum fragment size.

8. The method of any one of the preceding claims, wherein the content comprises at least one of: linear content, live content, or pre-recorded content served as live.

9. The method of any one of the preceding claims, further comprising receiving, from a packaging device, at least one frame of the segment.

10. The method of claim 9, further comprising determining, based on the at least one frame of the segment, that at least the first portion of the first fragment is available.

11. The method of any one of the preceding claims, wherein sending the first portion of the first fragment comprises sending, to the client device, at least one frame of the segment.

12. The method of any one of the preceding claims, further comprising:
sending, by the client device, the request for the segment of the content;
receiving, by the client device, at least the first portion of the first fragment; and
causing the first portion of the first fragment to be at least one of: decoded, output, or stored.

13. An apparatus comprising:
one or more processors; and
memory storing processor-executable instructions that, when executed by the one or more processors, cause the apparatus to perform the method of any one of claims 1-12.

14. One or more non-transitory computer-readable media storing processor-executable instructions that, when executed by one or more processors, cause the one or more processors to perform the method of any one of claims 1-12.

15. A system comprising:
a computing device configured to perform the method of any one of claims 1-12; and
a client device configured to at least one of: decode, output, or store at least a portion of the content.
